# EUROPEAN PATENT APPLICATION

(11) **EP 3 382 522 A1**
(43) Date of publication of application: **03.10.2018**
(21) Application number: 15909240.2
(22) Date of filing: 25.11.2015
(51) Int. Cl.: G06F 3/0484, G06F 3/0488

(54) **METHOD FOR INPUTTING NUMERICAL VALUE BY TOUCH OPERATION AND PROGRAM FOR INPUTTING NUMERICAL VALUE BY TOUCH OPERATION**

(71) Applicant: Misumi Group Inc., Tokyo 112-8583 (JP)
(72) Inventor: TANIGUCHI, Koichi, Tokyo 112-8583 (JP)
(74) Representative: Schön, Christoph
(86) International application number: PCT/JP2015/083056
(87) International publication number: WO 2017/090121

(57) **Abstract**

According to the method and the program for inputting a numerical value by a touch operation in accordance with the present invention, a numerical value input screen display unit (11) displays a numerical value input screen (60) on a touch panel display unit (20). A high-order digit numerical value input unit (12) sets a numerical value of an integer place based on the position of a slider (62) on an input range bar (61) by operation of slider (62). A low-order digit numerical value input unit (13) sets a numerical value of a first decimal place by increasing or decreasing the numerical value based on amount and the direction of movement of orbiting button (64) by operation orbiting button (64). An input numerical value display unit (14) determines an input numerical value based on numerical value of the integer place set by the high-order digit numerical value input unit (12) and the numerical value of the first decimal place set by the low-order digit numerical value input unit (13), and displays the input numerical value on a numerical value display spot (63).

## Description

### Technical Field

The present invention relates to a method and a program for inputting a numerical value by a touch operation.

### Background Art

Hitherto, there have been proposed various methods for inputting numerical values without using an input device, such as a keyboard, in a touch panel apparatus, i.e., an apparatus provided with a touch panel display unit, such as a tablet terminal, a smartphone, a personal computer (refer to, for example, Patent Literature 1).

Patent Literature 1 describes a method in which an image simulating a jog dial is displayed on a touch panel, and a numerical value to be entered is determined according to the operation of turning the jog dial by a finger of a user or a stylus. According to the method described in Patent Literature 1, the number of numerical values to be entered increases as the moving speed of the finger of the user or the stylus increases.

### Citation List

### Patent Literature

Patent Literature 1: Japanese Patent Application Laid-Open No. 2000-267777

### Summary of Invention

### Technical Problem

According to the method for inputting numerical values described in Patent Literature 1, a user who intends to input numerical values is required to repeatedly turn a jog dial to enter a large numerical value, thus inconveniently taking much time to enter the numerical value. Further, the user has to slowly move his or her finger when entering a small numerical value, thus inconveniently making the operation difficult.

The present invention has been made in view of the foregoing circumstances, and an object of the invention is to provide a method for inputting a numerical value and a program for inputting a numerical value, which make it possible to easily input both large numerical values and small numerical values by touch operations.

### Solution to Problem

A method for inputting a numerical value by a touch operation in accordance with the present invention is:
a method for inputting a numerical value by a touch operation in a touch panel apparatus provided with a touch panel display unit, a contact position detection unit that detects the position of contact of a pointer with the touch panel display unit, and a control unit that accepts a touch operation by a user according to the position of contact of the pointer detected by the contact position detection unit, the method including:
a numerical value input screen display step in which the control unit displays, on the touch panel display unit, a numerical value input screen including an input range bar that indicates a range in which a numerical value of a predetermined digit can be input, a slider that moves on the input range bar or along the input range bar in an extending direction of the input range bar in response to a touch operation by a user, an orbiting button that moves on a circumference of a circle having a predetermined diameter around the slider in response to the touch operation by the user, and a numerical value display spot that displays the numerical value of the predetermined digit;
a high-order digit numerical value input step in which a numerical value of a digit that is a specific digit or more of the predetermined digit is set based on a position of the slider in the extending direction of the input range bar in a case where the control unit accepts an operation of moving the slider by the user;
a low-order digit numerical value input step in which a numerical value of a digit that is lower than the specific digit of the predetermined digit is set by increasing or decreasing the numerical value based on an amount of movement and a direction of movement of the orbiting button in a case where the control unit accepts an operation of moving the orbiting button by the user; and
an input numerical value display step in which the control unit determines an input numerical value based on the numerical value which has been set by the high-order digit numerical value input step and the digit of which is the specific digit or more and the numerical value which has been set by the low-order digit numerical value input step and the digit of which is lower than the specific digit, and displays the input numerical value on the numerical value display spot.

According to the method for inputting a numerical value by a touch operation in accordance with the present invention, the numerical value input screen, which includes an input range bar, a slider, an orbiting button, and a numerical value display spot, is displayed on the touch panel display unit by the numerical value input screen display step.

Further, when the user performs a touch operation (slide operation) to move the slider, a numerical value of a digit of a specific digit or more is set according to the position of the slider by the high-order digit numerical value input step. Further, when the user performs a touch operation of moving the orbiting button, a numerical value of a digit that is lower than the specific digit is set according to the amount of movement and the direction of movement of the orbiting button by the low-order digit numerical value input step.

Further, an input numerical value is determined by the input numerical value display step on the basis of the numerical value of the digit of the specific digit or more set by the high-order digit numerical value input step and the numerical value of the digit that is lower than the specific digit set by the low-order digit numerical value input step, and the determined input numerical value is indicated on the numerical value display spot.

Hence, the user can quickly set a numerical value of a high-order digit of an input numerical value within an extensive numerical value range by moving (sliding) the slider while checking the input numerical value indicated on the numerical value display spot, and can also easily set a numerical value of a small low-order digit of an input numerical value by moving (circularly moving) the orbiting button.

Further, a program for inputting a numerical value by a touch operation in accordance with the present invention is a program for inputting a numerical value executed by a control unit in a touch panel apparatus provided with a touch panel display unit, a contact position detection unit that detects the position of contact of a pointer with the touch panel display unit, and the control unit that accepts a touch operation by a user according to the position of contact of the pointer detected by the contact position detection unit, and the program causes the control unit to function as:
a numerical value input screen display unit that displays, on the touch panel display unit, a numerical value input screen including an input range bar that indicates a range in which a numerical value of a predetermined digit can be input, a slider that moves on the input range bar or along the input range bar in an extending direction of the input range bar in response to a touch operation by a user, an orbiting button that moves on the circumference of a circle having a predetermined diameter around the slider in response to the touch operation by the user, and a numerical value display spot that displays the numerical value of the predetermined digit;
a high-order digit numerical value input unit that sets a numerical value of a digit which is a first specific digit or more of the predetermined digit based on a position of the slider in the extending direction of the input range bar in a case where an operation of moving the slider by the user is accepted;
a low-order digit numerical value input unit that sets a numerical value of a digit which is lower than the first specific digit of the predetermined digit by increasing or decreasing the numerical value based on an amount of movement and a direction of movement of the orbiting button in a case where an operation of moving the orbiting button by the user is accepted; and
an input numerical value display unit that determines an input numerical value based on the numerical value which has been set by the high-order digit numerical value input unit and the digit of which is the first specific digit or more and the numerical value which has been set by the low-order digit numerical value input unit and the digit of which is lower than the first specific digit, and displays the input numerical value on the numerical value display spot.

According to the method for inputting a numerical value by a touch operation in accordance with the present invention, the numerical value input screen display unit displays the numerical value input screen, which includes the input range bar, the slider, the orbiting button, and the numerical value display spot, on the touch panel display unit.

Further, if the user performs the touch operation (slide operation) of moving the slider, then the high-order digit numerical value input unit sets a numerical value of a digit that is the first specific digit or more according to the position of the slider. If the user performs the touch operation of moving the orbiting button, then the low-order digit numerical value input unit sets a numerical value of a digit that is lower than the first specific digit according to the amount of movement and the direction of movement of the orbiting button.

Then, an input numerical value is determined by the input numerical value display unit on the basis of the numerical value of the digit of the specific digit or more set by the high-order digit numerical value input step and the numerical value of the digit that is lower than the specific digit set by the low-order digit numerical value input step, and the determined input numerical value is indicated on the numerical value display spot.

Therefore, the user can promptly set a numerical value of a high-order digit of an input numerical value within an extensive numerical value range by moving (sliding) the slider while checking the input numerical value indicated on the numerical value display spot, and can also easily set a numerical value of a small low-order digit of the input numerical value by moving (circularly moving) the orbiting button.

Further, in the program for inputting a numerical value by a touch operation in accordance with the present invention,
there is a plurality of digits that are lower than the first specific digit,
the numerical value input screen display unit displays a touch pad, which accepts a touch operation by the user, outside a display area of the orbiting button on the numerical value input screen, and
the low-order digit numerical value input unit sets a numerical value of a second specific digit, which is lower than the first specific digit, by increasing or decreasing the numerical value according to the amount of movement and the direction of movement of the orbiting button in the case where an operation of moving the orbiting button by the user is accepted, and sets a numerical value of a third specific digit, which is lower than the second specific digit, by increasing or decreasing the numerical value according to the number of touches on the touch pad in the case where the operation of touching the touch pad by the user is accepted.

With this arrangement, the low-order digit numerical value input unit sets a numerical value of the second specific digit according to the operation of moving the orbiting button by the user, and sets a numerical value of the third specific digit that is lower than the second specific digit according to the operation of touching the touch pad by the user. This enables the user to separately set the numerical value of the second specific digit and the numerical value of the third specific digit, thus easily adding a small change to the input numerical value.

Further, in the program for inputting a numerical value by a touch operation in accordance with the present invention, the control unit functions as:
an overflow correction unit that corrects the numerical value of a digit of the first specific digit or more set by the high-order digit numerical value input unit by reflecting an overflow in a case where increasing or decreasing the numerical value of the digit that is lower than the first specific digit by the low-order digit numerical value input unit causes an occurrence of the overflow of the numerical value of the digit that is lower than the first specific digit.

With this arrangement, the user can change the numerical value of the digit of the first specific digit or more together with the numerical value of the digit that is lower than the first specific digit by touching the orbiting button.

Further, in a case where the numerical value of the first specific digit or more is corrected by the overflow correction unit while the operation of moving the orbiting button by the user is being accepted, the numerical value input screen display unit displays a virtual slider at a position corresponding to the corrected numerical value on the input range bar, and then terminates the display of the virtual slider and shifts the position of the slider to a position, where the virtual slider has been displayed, upon an end of the acceptance of the operation of moving the orbiting button by the user.

With this arrangement, the user can easily know the change amount of an input numerical value by visually recognizing the position of the virtual slider while changing the numerical value of the digit of the first specific digit or more by touching the orbiting button.

Further, in the program for inputting a numerical value by a touch operation in accordance with the present invention,
the numerical value input screen display unit displays the numerical value display spot on the slider in a case where the operation of moving the slider by the user is not being accepted, and displays the numerical value display spot outside the slider in the case where the operation of moving the slider by the user is being accepted.

With this arrangement, when the user is not performing the touch operation of moving the slide, the user can visually recognize the position of the slider and the input numerical value at the same time. When the user is performing the touch operation of moving the slider, it is possible to prevent the input numerical value from being hidden behind the pointer (a finger, a stylus or the like).

### Brief Description of Drawings

FIG. 1 is an appearance illustration of a touch panel apparatus in which the method for inputting a numerical value by a touch operation and a program for inputting a numerical value by a touch operation in accordance with the present invention are carried out;
FIG. 2 is a configuration diagram of the touch panel apparatus illustrated in FIG. 1;
FIG. 3 is a first flowchart illustrating the processing for inputting a numerical value by the touch operation;
FIG. 4 is a second flowchart illustrating the processing for inputting the numerical value by the touch operation;
FIG. 5 is an explanatory diagram illustrating a numerical value input screen;
FIG. 6A and FIG. 6B are explanatory diagrams illustrating another embodiment of the numerical value input screen, wherein FIG. 6A illustrates a configuration in which a touch pad is placed in the vicinity of the right and left of an orbiting button, and FIG. 6B illustrates a configuration in which the touch pad is placed outside the both ends of an input range bar;
FIG. 7A and FIG. 7B are first explanatory diagrams illustrating screens for inputting a plurality of parameters, wherein FIG. 7A illustrates an initial state, and FIG. 7B illustrates a state in which the value of parameter C has been changed;
FIG. 8A and FIG. 8B are second explanatory diagrams illustrating screens for inputting a plurality of parameters, wherein FIG. 8A illustrates a state in which parameter A has been set, and FIG. 8B illustrates a state in which the value of parameter C has been changed;
FIG. 9A and FIG. 9B are third explanatory diagrams illustrating screens for inputting a plurality of parameters, wherein FIG. 9A illustrates a state in which the value of parameter D has been locked, and FIG. 9B illustrates a state in which the value of parameter E has been changed;
FIG. 10A and 10B are fourth explanatory diagrams illustrating screens for inputting a plurality of parameters, wherein FIG. 10A illustrates a state in which parameter E has been locked, and FIG. 10B illustrates a state in which the value of parameter C has been changed; and
FIG. 11A and FIG. 11B are fifth explanatory diagrams illustrating screens for inputting a plurality of parameters, wherein FIG. 11A illustrates a state in which parameters A to E have been set, and FIG. 11B illustrates a state in which parameter E has been unlocked.

### Description of Embodiments

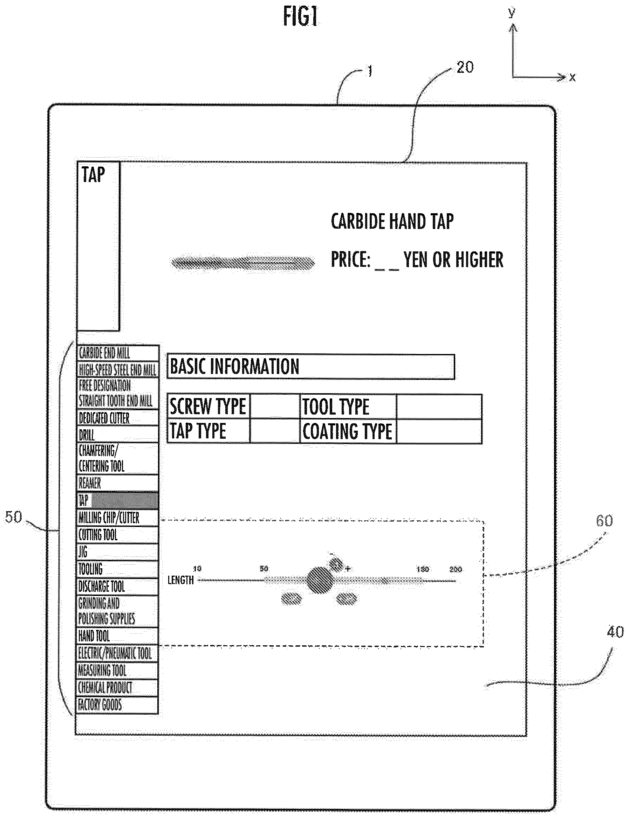

An embodiment of the present invention will be described with reference to FIG. 1 to FIG. 6B.

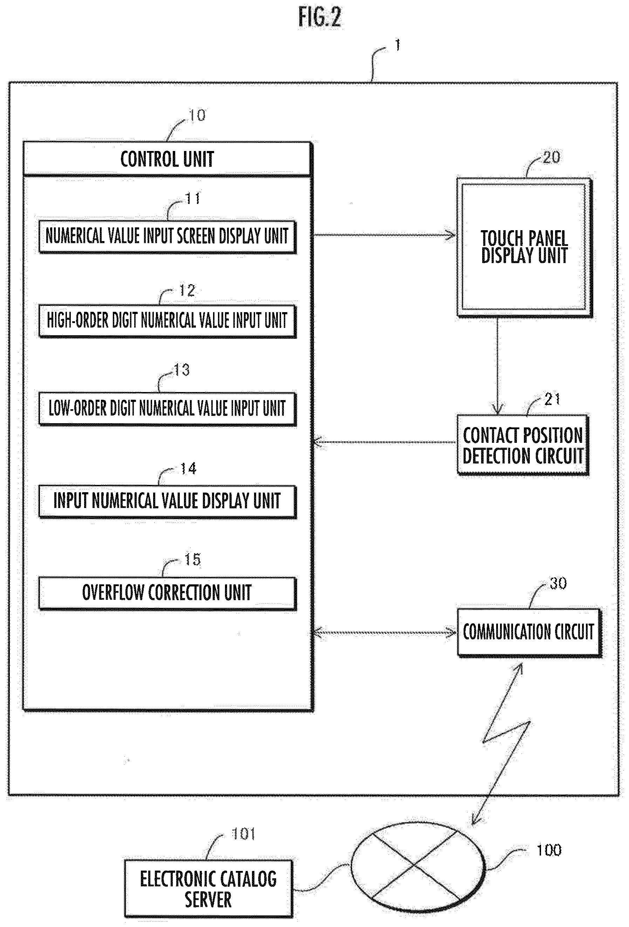

Referring to FIG. 1, a touch panel apparatus 1, in which an electronic book browsing assistance method and an electronic book browsing assistance program in accordance with the present invention are carried out, is a portable tablet terminal, and includes touch panel display unit 20 placed on the front surface of a chassis, and a control unit 10 (refer to FIG. 2), which is placed in the chassis and which controls the display of the touch panel display unit 20. The touch panel display unit 20 is configured by, for example, placing a transparent touch panel over the surface of a liquid crystal display.

FIG. 1 illustrates a state in which a browse screen 40 of an electronic catalog of tools (corresponding to an electronic book in the present invention) is being displayed. An index 50 of the tools is being displayed on the far left of the touch panel display unit 20.

In the present embodiment, the horizontal direction (lateral direction) of the touch panel display unit 20 is denoted by "x" and the perpendicular direction (vertical direction) of the touch panel display unit 20 is denoted by "y."

An index 50 is formed by arranging a plurality of item buttons individually assigned to items (categories) in the electronic catalog of the tools in the vertical direction (the y direction in FIG. 1). In the index 50, there are arranged 19 item buttons to which the following items are individually assigned, beginning at the top, such as "carbide end mill," "high-speed steel end mill," "freely-specified straight blade end mill," "dedicated cutter," "drill," "chamfering/centering tools," "reamer," "tap," "milling chip-cutter," "cutting tools," "jig," "tooling," "discharge tool," "grinding and polishing supplies," "hand tool," "electric-pneumatic tool," "measurement tool," "chemical products," and "factory goods." In FIG. 1, the item "tap" is selected and therefore the item button of "tap" is highlighted.

When placing an order, if a user selects a tool that requires the designation of the length of the tool, then a numerical value input screen 60 for inputting the length of the tool appears. The numerical value input screen 60 will be discussed later.

Referring now to FIG. 2, the touch panel apparatus 1 includes a contact position detection circuit 21 (corresponding to the contact position detector in the present invention), which detects the position of a pointer (e.g., a finger of the user or a stylus) that comes in contact with the touch panel display unit 20, and a communication circuit 30, in addition to the control unit 10 and the touch panel display unit 20.

The control unit 10 is an electronic circuit unit comprised of a CPU, a memory, an interface circuit and the like, which are not illustrated. The control unit 10 runs, through the CPU, an electronic book browsing assistance program stored in the memory so as to implement the electronic book browsing function thereof, and to function as a numerical value input screen display unit 11, a high-order digit numerical value input unit 12, a low-order digit numerical value input unit 13, an input numerical value display unit 14, and an overflow correction unit 15, which will be described later.

The control unit 10 carries out the processing for browsing the electronic books according to a touch operation by the user through the touch panel display unit 20. In this case, the data of the electronic books may be held in the memory of the control unit 10 or may be downloaded from an electronic catalog server 101 by the communication circuit 30 through a communication network 100.

When the electronic book browsing application is started by the user, the control unit 10 runs the program of the application (including the electronic book browsing assistance program in accordance with the present invention) by the CPU to display the browse screen 40 of electronic books on the touch panel display unit 20, as illustrated in FIG. 1. The program for the electronic book browsing application may be held in the memory of the control unit 10 in advance or may be downloaded from the electronic catalog server 101 or the like.

In the browsing screen of FIG. 1, the user (the viewer) of the touch panel apparatus 1 can perform page feed and page return by sliding rightward or leftward a finger in contact with the touch panel display unit 20 (swiping operation), as in the case of a typical electronic book browsing application.

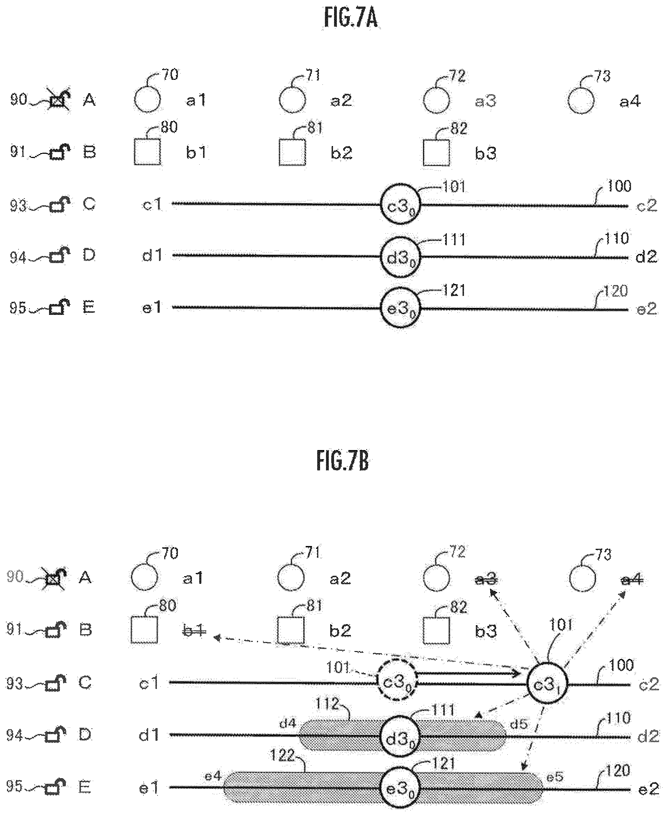

When placing an order, if the user selects a tool that requires the designation of a plurality of parameters, such as a material, a length, a width, and the depth of a hole (the hand tap in FIG. 1), then the control unit 10 carries out the processing for inputting the plurality of parameters illustrated in FIG. 7A to FIG. 11B so as to set the conditions of the parameters (e.g., values and the material).

FIG. 7A to FIG. 11B illustrate examples in which five parameters, namely, A, B, C, D, and E, which are interdependent, are set. FIG. 7A illustrates the initial state of the input screen for parameters A to E. The input screen includes radio buttons 70 to 73 for inputting parameter A, check boxes 80 to 82 for inputting parameter B, a numerical value range bar 100 for inputting parameter C and a slider 101 thereof, a numerical value range bar 110 for inputting parameter D and a slider 111 thereof, a numerical value range bar 120 for inputting parameter E and a slider 121 thereof, and lock icons 90 to 95, which indicate that the settings of the parameters A to E have been locked.

The radio buttons 70 to 73 are used to set parameter A to one of a1 to a4 (only one thereamong). Further, the check boxes 80 to 82 are used to select among conditions b1 to b3 to be applied to parameter B (multiple choices being allowed).

The numerical value range bar 100 and the slider 101 thereof are used to set the value of parameter C within the range of c1 to c2. Similarly, the numerical value range bar 110 and the slider 111 thereof are used to set the value of parameter D within the range of dl to d2, and the numerical value range bar 120 and the slider 121 thereof is used to set the value of parameter E within the range of e1 to e2.

The sliders 101, 111 and 121 indicate the set values corresponding to parameters C, D and E. In the initial state illustrated in FIG. 7A, c3o, d3o and e3o, which are middle values in the setting ranges, are shown. Further, in FIG. 7A, parameter A is not selected, so that "×" denoting that parameter A cannot be locked is displayed.

Next, FIG. 7B illustrates a case where the user has moved the slider 101 of parameter C (the start of setting), the position of the slider 101 having been shifted to change the value of parameter C to c3₁. Whenever the value of parameter C is changed, the control unit 10 changes the settable ranges of the remaining parameters A, B, D and E.

In the example of FIG. 7B, the control unit 10 limits the setting range of parameter A to a1 and a2, displaying the double strike-through lines over a3 and a4, and also limits the setting range of parameter B to b2 and b3, displaying the double strike-through lines over b1. Further, the control unit 10 displays a settable range (limited range) 112 of parameter D (d4 to d5) on the numerical value range bar 110 of parameter D, and displays a settable range 122 (e4 to e5) on the numerical value range bar 120 of parameter E.

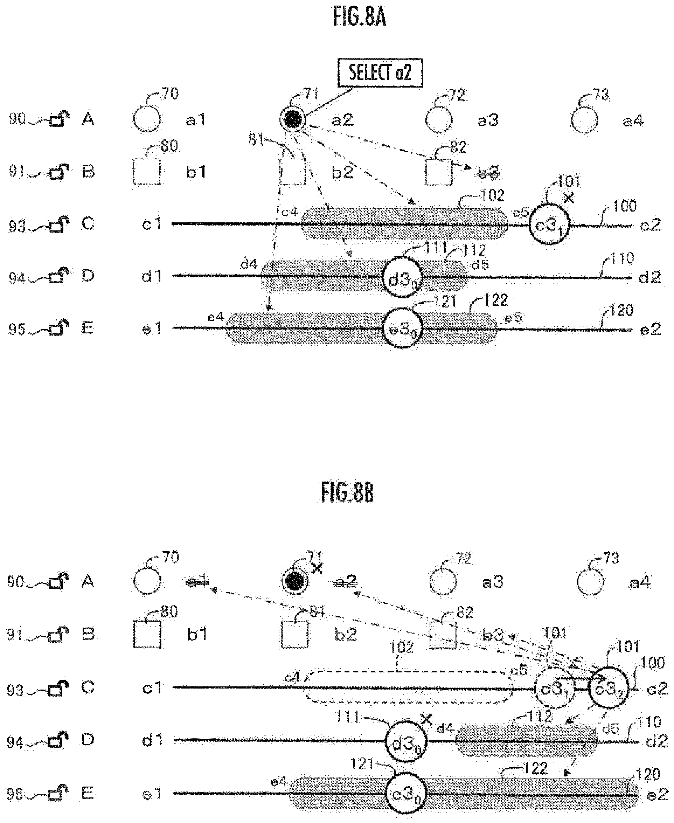

Next, as illustrated in FIG. 8A, if the user touches the radio button 71 to select a2 (radio button initial selecting operation) for parameter A, then the control unit 10 clears "×," which denotes that parameter A cannot be locked, and changes the settable ranges of parameters B to E.

The control unit 10 limits the setting range of parameter B to b1 and b2, and displays the double strike-through line over b3. Further, the control unit 10 displays a settable range 102 of parameter C (c4 to c5) on the numerical value range bar 100 of parameter C, displays a settable range 112 (d4 to d5) of parameter D on the numerical value range bar 110 of parameter D, and displays a settable range 122 (e4 to e5) of parameter E on the numerical value range bar 120 of parameter E.

For parameter C, c3₁, which had been set until then, has deviated from the settable range 102, so that the control unit 10 displays "×" in the vicinity of the slider 101 of parameter C.

Further, as illustrated in FIG. 8A and FIG. 8B, when the value of parameter C is changed from c3₁ to c3₂, the control unit 10 turns off the settable range 102 of parameter C and changes the settable ranges of parameters A, B, D and E in response to the change of the value of parameter C.

The control unit 10 limits the settable range of parameter A to a3 and a4, displays the double strike-through line over a1 and a2, and displays "×" in the vicinity of the radio button 71 of a2, which is no longer in the settable range due to the limitation.

Further, for parameter B, the control unit 10 clears "unselectable" and turns off the double strike-through line of b3, thus making all b1, b2 and b3 selectable. The control unit 10 also changes the settable range 112 of the numerical value range bar 110 of parameter D and the settable range 122 of the numerical value range bar 120 of parameter E. The change in the settable range 112 causes d3o, which had been set until then, to deviate from the settable range 112, so that the control unit 10 displays "×" in the vicinity of the slider 111 of parameter D.

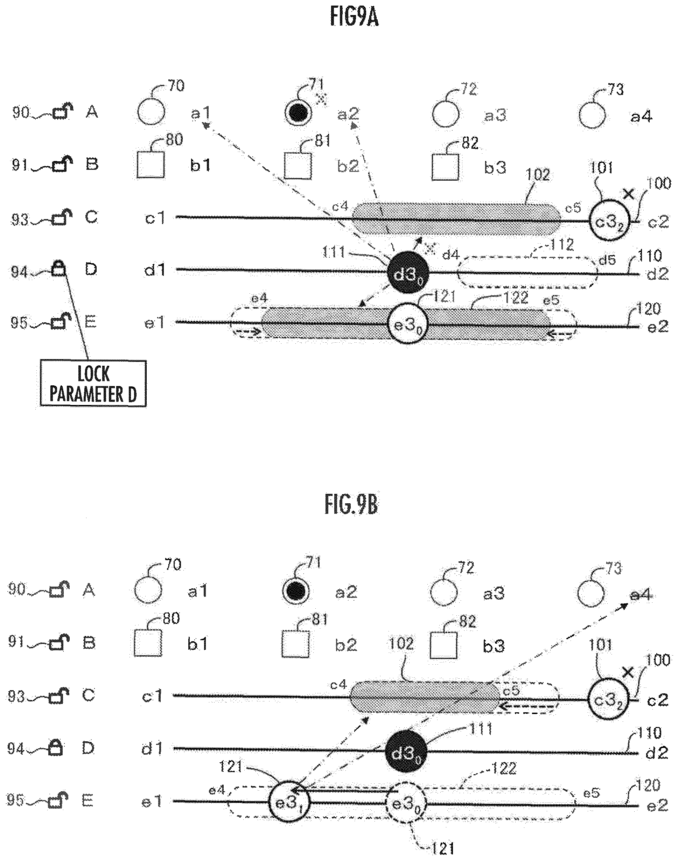

Next, as illustrated in FIG. 9A, when the user holds down the slider 111 of parameter D, the value of parameter D is locked (fixed). The control unit 10 switches the display of a lock icon 94 of parameter D to "Locked" and changes the display of the numerical value of the slider 111 to blank display. Then, in response to the locking of parameter D, the control unit 10 turns off the settable range 112 of parameter D and clears "unselectable" (i.e., turns off the "×" icon) of a2 for parameter A.

Further, the control unit 10 displays the settable range 102 on the numerical value range bar 100 of parameter C, and changes the settable range 122 of the numerical value range bar 120 of parameter D. A set value c3₂ of parameter C has deviated from the settable range 102, so that the control unit 10 displays the "×" icon.

Next, as illustrated in FIG. 9B, if the user operates the slider 121 of parameter E to change the value of parameter E to e3₁, then the control unit 10 turns off the settable range 122 of parameter E in response to the change.

Further, the control unit 10 sets a4 for parameter A to "unselectable" (i.e., displays the double strike-through line over a4) and changes the settable range 102 for parameter C according to the value e3₁ of parameter E.

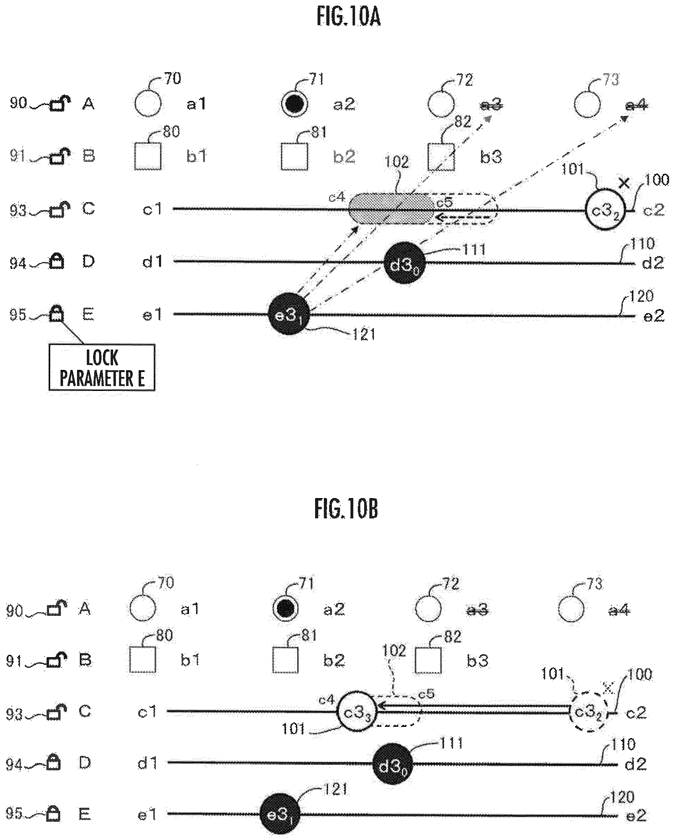

Next, as illustrated in FIG. 10A, if the user holds down the slider 121 of parameter E, then the control unit 10 locks the value e3₁ of parameter E, switches the display of the lock icon 95 to "Locked," and changes the display of the numerical value of the slider 121 to the blank display.

Further, according to the locked value e3₁ of parameter E, the control unit 10 makes a3 and a4 unselectable for parameter A, and displays the double strike-through lines over a3 and a4. The control unit 10 also changes the settable range 102 for parameter C.

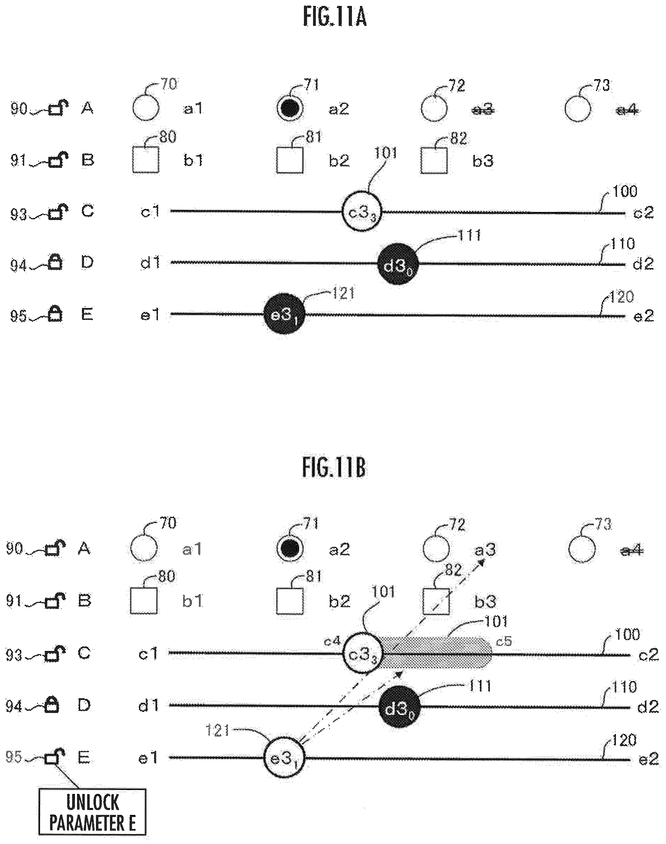

Next, as illustrated in FIG. 10B, if the user operates the slider 101 of parameter C to set a value c3₃ in the settable range 102, then the control unit 10 turns off the display of the settable range 102 of parameter C. This completes the setting of parameters A, C, D and E, as illustrated in FIG. 11A. Thereafter, when the user selects at least one of b1 to b3 for parameter B, all the parameters will be set, enabling an operation, such as ordering, to be accomplished.

Further, as illustrated in FIG. 11B, if the slider 121 of parameter E, which has been locked, is held down, then the control unit 10 unlocks parameter E, changes the display of the lock icon 95 to "Unlocked," and changes the slider 121 from the blank display back to an original display.

Then, the control unit 10 displays the settable ranges of parameters A, B and C, which are not locked. More specifically, the control unit 10 displays the double strike-through line over a4 for parameter A to indicate that a4 is unselectable, and displays the settable range 101 for parameter C. In this case, for the parameters for which unselectable values have been set, the control unit 10 displays the "×" icon in the vicinity of the sliders.

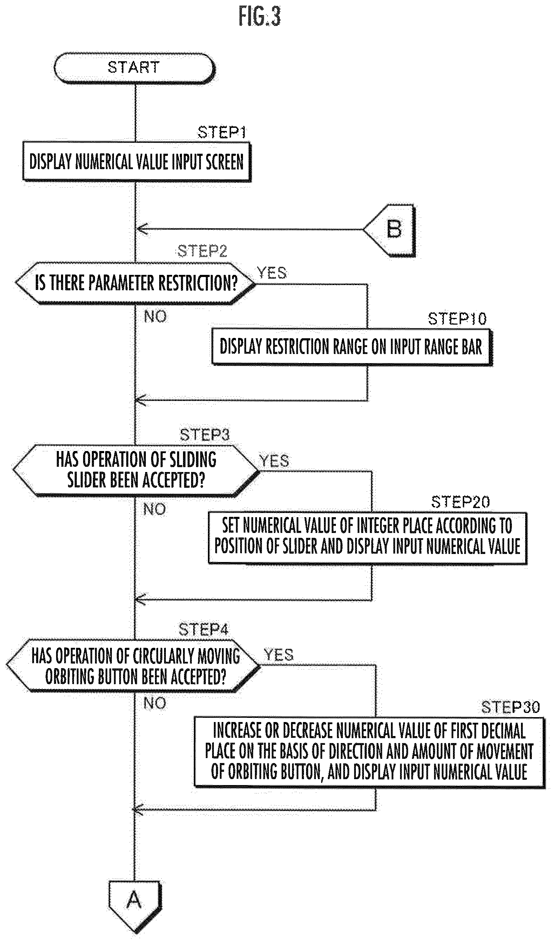

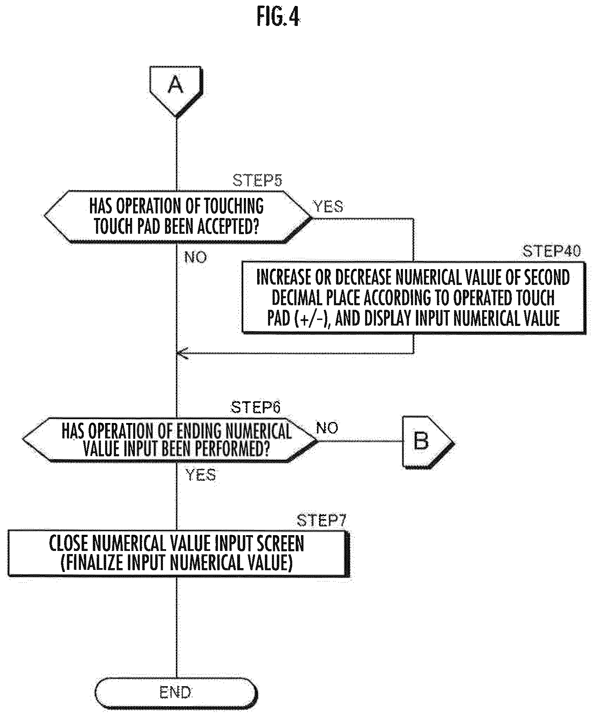

Thus, the control unit 10 carries out the processing according to the flowcharts given in FIG. 3 and FIG. 4 on the parameters for which the input ranges have been limited (parameters C to E in the examples illustrated in FIG. 7A to FIG. 11B) so as to carry out the processing for accepting the input of the numerical values of the parameters by the user. The following will describe, with reference to FIG. 3 and FIG. 4, the processing for inputting numerical values by the control unit 10. The processing of STEP 1, STEP 2 and STEP 10 of FIG. 3 is carried out by the numerical value input screen display unit 11 (corresponding to the numerical value input screen display step in the present invention). The numerical value input screen display unit 11 displays the numerical value input screen 60 on the touch panel display unit 20 in STEP 1.

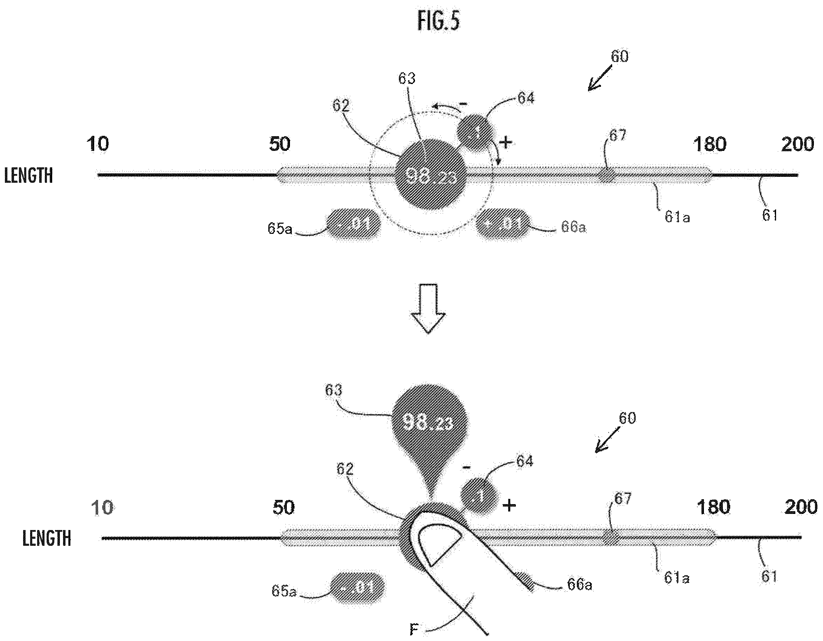

As illustrated in FIG. 5, the numerical value input screen 60 includes an input range bar 61 which indicates the designation range of the length of a tool that is being selected, a limited range 61a which is displayed if the length range is limited according to the specifications of a tool, a slider 62 which moves in the lateral direction (the "x" direction, i.e., the direction in which the input range bar 61 extends) on the limited range 61a on the input range bar 61 according to a touch operation by a user, a numerical value display spot 63 which displays input numerical values, an orbiting button 64 which moves on the circumference (corresponding to the display area of the orbiting button in the present invention) of a circle (corresponding to the circle having a predetermined diameter in the present invention) around the slider 62 according to a touch operation by the user, a left touch pad 65a and a right touch pad 66a which accept touch inputs by the user, and a virtual slider 67 which indicates the position of an input numerical value when the numerical value is input by using the orbiting button 64.

The slider 62 may alternatively be moved along the input range bar 61 in the vicinity of the upper side or the lower side of the input range bar 61 rather than being moved on the input range bar 61.

If the numerical value input screen display unit 11 accepts the movement operation (slide operation) of the slider 62 according to the state of detection of the pointer by the contact position detection circuit 21, then the numerical value input screen display unit 11 changes the display position of the slider 62 according to the operation. Further, if the numerical value input screen display unit 11 accepts the operation of moving (the operation of circularly moving) the orbiting button 64 according to the state of detection of the pointer by the contact position detection circuit 21, then the numerical value input screen display unit 11 changes the display position of the orbiting button 64 according to the operation. When the slider 62 moves, the orbiting button 64 moves together with the slider 62 while maintaining the position thereof relative to the slider 62.

Further, as illustrated under the white arrow in FIG. 5, if the contact position detection circuit 21 detects that a pointer F (a finger of the user in this case) has come in contact with the slider 62, then the numerical value input screen display unit 11 moves the position of the numerical value display spot 63 to the outside of the slider 62. This enables the user to move (slide) the slider while visually recognizing the numerical value display spot 63.

According to the present embodiment, a five-digit numerical value composed of a triple-digit integer and a double-digit decimal (corresponding to a predetermined number of digits in the present invention) is input on the numerical value input screen 60. In this case, the one's place corresponds to the specific digit and the first specific digit in the present invention. Further, the first decimal place corresponds to the second specific digit in the present invention, and the second decimal place corresponds to a third specific digit in the present invention.

In STEP 2 of FIG. 3, the numerical value input screen display unit 11 determines whether the tool being selected by the user has a restriction on a parameter (the length of the tool in this case). The processing branches off to STEP 10 if the parameter has a restriction, or proceeds to STEP 3 if the parameter does not have a restriction. If the parameter does not have a restriction, then a numerical value from 10 to 200 can be input.

In STEP 10, the numerical value input screen display unit 11 displays the limited range 61a (input range) of the length on the input range bar 61, as illustrated in FIG. 5, and proceeds to STEP 3. In the example of FIG. 5, the range of 50 to 180 out of the range of 10 to 200, which is the range on the input range bar 61, is displayed as the limited range 61a.

The processing of the subsequent STEP 3 is carried out by a high-order digit numerical value input unit 12. In STEP 3, according to the state of detection of the pointer by the contact position detection circuit 21, the high-order digit numerical value input unit 12 determines whether the slide operation on the slider 62 by the user has been accepted. If the slide operation has been accepted, then the processing branches off to STEP 20 or proceeds to STEP 4 if the slide operation has not been accepted.

The processing of STEP 20 is carried out by the high-order digit numerical value input unit 12 and the input numerical value display unit 14. The high-order digit numerical value input unit 12 sets a numerical value of the integer digit of the input numerical value according to the position of the slider 62. The input numerical value display unit 14 displays, on the numerical value display spot 63, the numerical value of the integer digit set by the high-order digit numerical value input unit 12, and proceeds to STEP 4.

The processing by the high-order digit numerical value input unit 12 in STEP 3 and STEP 4 corresponds to the processing of the high-order digit numerical value input step in the present invention. Further, the processing by the input numerical value display unit 14 in STEP 20 corresponds to the processing of the input numerical value display step in the present invention.

In the example illustrated in FIG. 5, when the user slides the slider 62 in the right direction, the numerical value of the integer digit of the input numerical value is incremented by 1 toward 180 and displayed on the numerical value display spot 63. Further, when the user slides the slider 62 in the left direction, the numerical value of the integer digit of the input numerical value is decremented by -1 toward 50 and displayed on the numerical value display spot 63.

The processing of STEP 4 is carried out by the low-order digit numerical value input unit 13. In STEP 4, according to the state of detection of the pointer by the contact position detection circuit 21, the low-order digit numerical value input unit 13 determines whether the operation of circularly moving the orbiting button 64 by the user has been accepted. Then, the processing branches off to STEP 30 if the circular movement operation has been accepted, or proceeds to STEP 5 of FIG. 4 if the circular movement operation has not been accepted.

The processing of STEP 30 is carried out by the low-order digit numerical value input unit 13, the input numerical value display unit 14, and the overflow correction unit 15. According to the orbiting direction (the direction of movement) and the movement amount of the orbiting button 64, the low-order digit numerical value input unit 13 increments the numerical value of the first decimal place of the input numerical value by 0.1 and sets the resulting numerical value if the orbiting button 64 is circularly moved clockwise. If the orbiting button 64 is circularly moved counterclockwise, then the low-order digit numerical value input unit 13 decrements the numerical value of the first decimal place of the input numerical value by 0.1 and sets the resulting numerical value.

The overflow correction unit 15 carries out processing for correcting the numerical value of the integer digit of an input numerical value if the overflow (overflow or underflow) of the numerical value of the first decimal place occurs. More specifically, if an overflow of the digit of the first decimal place occurs, then the overflow correction unit 15 adds 1 to the numerical value of the integer digit of the input numerical value. Further, if an underflow of the digit of the first decimal place occurs, then the overflow correction unit 15 subtracts 1 from the numerical value of the integer digit of the input numerical value.

The input numerical value display unit 14 displays the numerical value of the first decimal place set by the low-order digit numerical value input unit 13 on the numerical value display spot 63 as the numerical value of the first decimal place of the input numerical value, and proceeds to STEP 5 of FIG. 4. Further, if correction processing is carried out by the overflow correction unit 15, then the high-order digit numerical value input unit 12 sets the corrected numerical value of the integer digit as the numerical value of the integer digit of the input numerical value.

The processing carried out by the low-order digit numerical value input unit 13 in STEP 4 and STEP 30 corresponds to the processing of the low-order digit numerical value input step in the present invention. Further, the processing carried out by the input numerical value display unit 14 in STEP 30 corresponds to the processing of the input numerical value display step in the present invention.

The processing of STEP 4 of FIG. 4 is carried out by the low-order digit numerical value input unit 13. In STEP 4, according to the state of detection of the pointer by the contact position detection circuit 21, the low-order digit numerical value input unit 13 determines whether the touch operation on the left touch pad 65a or the right touch pad 66a performed by the user has been accepted. The processing branches off to STEP 40 if the touch operation has been accepted, or proceeds to STEP 6 if the touch operation has not been accepted.

The processing of STEP 40 is carried out by the low-order digit numerical value input unit 13, the input numerical value display unit 14, and the overflow correction unit 15. Whenever the left (-) touch pad 65a or the right (+) touch pad 66a is touched, the low-order digit numerical value input unit 13 increments or decrements the numerical value of the second decimal place of the input numerical value by ±0.01, and sets the resulting numerical value. The overflow correction unit 15 carries out processing for correcting the numerical value of the first decimal place of the input numerical value if the overflow of the numerical value of the second decimal place occurs.

If the overflow of the digit of the second decimal place occurs, then the overflow correction unit 15 adds 0.1 to the numerical value of the first decimal place of the input numerical value. Further, if the underflow of the digit of the second decimal place occurs, then the overflow correction unit 15 subtracts 0.1 from the numerical value of the first decimal place of the input numerical value.

The input numerical value display unit 14 sets the numerical value of the first decimal place set by the low-order digit numerical value input unit 13 as the numerical value of the second decimal place of the input numerical value and displays the set numerical value on the numerical value display spot 63, and proceeds to STEP 6. Further, if correction processing is carried out by the overflow correction unit 15, then the low-order digit numerical value input unit 13 sets the corrected numerical value of the first decimal place as the numerical value of the first decimal place of the input numerical value.

The processing in STEP 3 to STEP 5, STEP 20, STEP 30 and STEP 40 determines the input numerical value according to the input value of the integer digit supplied by the high-order digit numerical value input unit 12 and the input values of the first and the second decimal places supplied by the low-order digit numerical value input unit 13.

The processing of STEP 6 and STEP 7 is carried out by the numerical value input screen display unit 11. According to the state of detection of the contact position of the pointer by the contact position detection circuit 21, the numerical value input screen display unit 11 determines, in STEP 6, whether the operation of ending the input of a numerical value has been performed by the user (e.g., the operation of touching a numerical value input completion button, which is not illustrated). If the operation of ending the input of the numerical value has been performed, then the processing proceeds to STEP 7, or if the operation of ending the input of the numerical value has not been performed, then the processing returns to STEP 2 of FIG. 3.

In STEP 7, the numerical value input screen display unit 11 closes the numerical value input screen 60. This terminates the processing for inputting the numerical values, thus finalizing the input numerical value. The user can continue to carry out, for example, the procedure for ordering the tool by using the input numerical value set by the processing illustrated in FIG. 3 and FIG. 4.

Further, if an overflow takes place due to the operation of circularly moving the orbiting button 64 performed by the user, causing the position of the slider 62 (the position of the slider 62 does not change while the orbiting button 64 is being circularly moved) to differ from an actual input numerical value (a numerical value updated by the processing for correcting the overflow), then the numerical value input screen display unit 11 displays the virtual slider 67 at the position of the actual input numerical value, as illustrated in FIG. 5.

The user can circularly move the orbiting button 64 to input the numerical value of the digit of the first decimal place while keeping track of the position of the actual input numerical value by visually recognizing the virtual slider 67.

Then, when the user completes the operation of circularly moving the orbiting button 64 and releases his or her finger from the touch panel display unit 20, the numerical value input screen display unit 11 turns off the virtual slider 67 and shifts the position of the slider 62 to the position where the virtual slider 67 was displayed (i.e., the actual position of the input numerical value).

### [Variations]

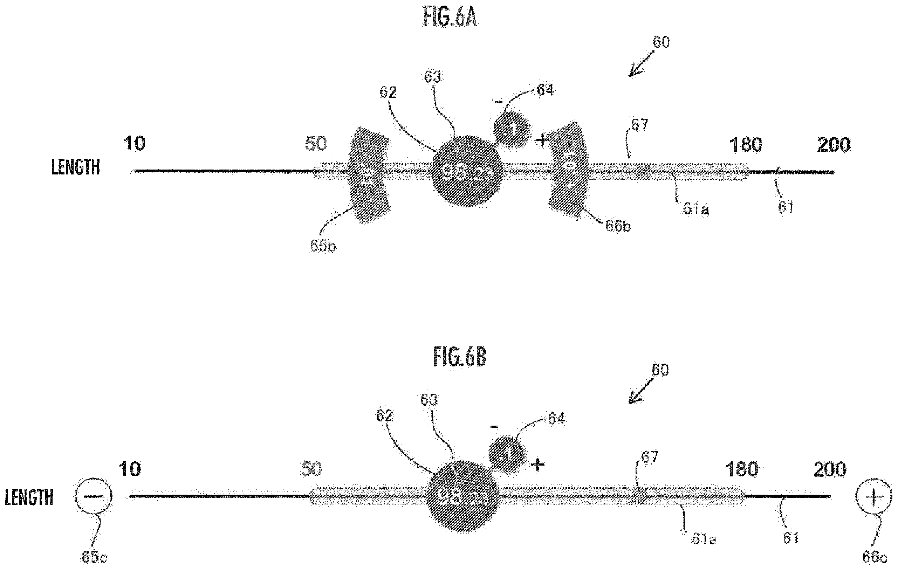

In the foregoing embodiment, the left touch pad 65a and the right touch pad 66a are disposed below the input range bar 61 outside the slider 62, as illustrated in FIG. 5. Alternatively, however, the left touch pad 65a and the right touch pad 66a may be disposed at other locations, as illustrated in FIG. 6A and FIG. 6B.

FIG. 6A illustrates an example in which the left touch pad 65b is disposed in the vicinity of the left side of the slider 62, and the right touch pad 66b is disposed in the vicinity of the right side of the slider 62. The left touch pad 65b and the right touch pad 66b move together with the slider 62 while maintaining the position thereof relative to the slider 62.

FIG. 6B illustrates an example in which the left touch pad 65c is disposed outside the left end of the input range bar 61, and the right touch pad 66c is disposed outside the right end of the input range bar 61. In the example of FIG. 6B, the positions of the left touch pad 65c and the right touch pad 66c are fixed.

In the foregoing embodiment, the example has been illustrated, in which a numerical value of an integer digit has been input through the high-order digit numerical value input unit 12, and the numerical values of a first and a second decimal places have been input through the low-order digit numerical value input unit 13; however, the separation between the high-order digit and the low-order digit is not limited thereto, and may be arbitrarily set.

For example, to input a numerical value of a five-digit integer, the numerical values of the higher four digits in the range of the digit in 10's place to the digit in 10,000's place may be input through the high-order digit numerical value input unit, and the numerical value of the digit in one's place may be input through the low-order digit numerical value input unit. In this case, the digit in 10's place corresponds to the specific digit in the present invention.

Further, in the foregoing embodiment, the input unit of numerical values input through the slider 62 has been ±1. Alternatively, however, the input unit may be a wider input unit, such as ±10 or ±50.

Further, in the present embodiment, the example has been described, in which the method for inputting numerical values and the program for inputting numerical values in accordance with the present invention have been applied to the electronic catalog of tools. However, the effects of the present invention can be obtained by extensively applying the present invention to devices, programs and the like that are adapted to input numerical values by touch operations.

### Description of Reference Numerals

1...Touch panel apparatus; 10...Control unit; 11...Numerical value input screen display unit; 12... High-order digit numerical value input unit; 13...Low-order digit numerical value input unit; 14...Input numerical value display unit; 15...Overflow correction unit; 20...Touch panel display unit; 21...Contact position detection circuit; 40...Browse screen; 60...Numerical value input screen; 61...Input range bar; 62...Slider; 63...Numerical value display spot; 64...Orbiting button; 65a...Left touch pad; 66a...Right touch pad; 67...Virtual slider; and F...Pointer (Finger of a user)

## Claims

1. A method for inputting a numerical value by a touch operation in a touch panel apparatus provided with a touch panel display unit, a contact position detection unit that detects the position of contact of a pointer with the touch panel display unit, and a control unit that accepts a touch operation by a user according to the position of contact of the pointer detected by the contact position detection unit, the method comprising:
a numerical value input screen display step in which the control unit displays, on the touch panel display unit, a numerical value input screen including an input range bar that indicates a range in which a numerical value of a predetermined digit can be input, a slider that moves on the input range bar or along the input range bar in an extending direction of the input range bar in response to a touch operation by the user, an orbiting button that moves on a circumference of a circle having a predetermined diameter around the slider in response to the touch operation by the user, and a numerical value display spot that displays the numerical value of the predetermined digit;
a high-order digit numerical value input step in which a numerical value of a digit that is a specific digit or more of the predetermined digit is set based on a position of the slider in the extending direction of the input range bar in a case where the control unit accepts an operation of moving the slider by the user;
a low-order digit numerical value input step in which a numerical value of a digit that is lower than the specific digit of the predetermined digit is set by increasing or decreasing the numerical value based on an amount of movement and a direction of movement of the orbiting button in a case where the control unit accepts an operation of moving the orbiting button by the user; and
an input numerical value display step in which the control unit determines an input numerical value based on the numerical value which has been set by the high-order digit numerical value input step and the digit of which is the specific digit or more and the numerical value which has been set by the low-order digit numerical value input step and the digit of which is lower than the specific digit, and displays the input numerical value on the numerical value display spot.

2. A program for inputting a numerical value by a touch operation, the program being executed by a control unit in a touch panel apparatus provided with a touch panel display unit, a contact position detection unit that detects the position of contact of a pointer with the touch panel display unit, and the control unit that accepts a touch operation by a user according to the position of contact of the pointer detected by the contact position detection unit, and the program causing the control unit to function as:
a numerical value input screen display unit that displays, on the touch panel display unit, a numerical value input screen including an input range bar that indicates a range in which a numerical value of a predetermined digit can be input, a slider that moves on the input range bar or along the input range bar in an extending direction of the input range bar in response to a touch operation by a user, an orbiting button that moves on a circumference of a circle having a predetermined diameter around the slider in response to the touch operation by the user, and a numerical value display spot that displays the numerical value of the predetermined digit;
a high-order digit numerical value input unit that sets a numerical value of a digit which is a first specific digit or more of the predetermined digit based on a position of the slider in the extending direction of the input range bar in a case where an operation of moving the slider by the user is accepted;
a low-order digit numerical value input unit that sets a numerical value of a digit which is lower than the first specific digit of the predetermined digit by increasing or decreasing the numerical value based on an amount of movement and a direction of movement of the orbiting button in a case where an operation of moving the orbiting button by the user is accepted; and
an input numerical value display unit that determines an input numerical value based on the numerical value which has been set by the high-order digit numerical value input unit and the digit of which is the first specific digit or more and the numerical value which has been set by the low-order digit numerical value input unit and the digit of which is lower than the first specific digit, and displays the input numerical value on the numerical value display spot.

3. The program for inputting a numerical value by a touch operation according to claim 2,
wherein there is a plurality of digits that are lower than the first specific digit, the numerical value input screen display unit displays a touch pad, which accepts a touch operation by the user, outside a display area of the orbiting button on the numerical value input screen, and
the low-order digit numerical value input unit sets a numerical value of a second specific digit, which is lower than the first specific digit, by increasing or decreasing the numerical value according to the amount of movement and the direction of movement of the orbiting button in the case where an operation of moving the orbiting button by the user is accepted, and sets a numerical value of a third specific digit, which is lower than the second specific digit, by increasing or decreasing the numerical value according to a number of touches on the touch pad in the case where the operation of touching the touch pad by the user is accepted.

4. The program for inputting a numerical value by a touch operation according to claim 2,
wherein the control unit functions as an overflow correction unit that corrects the numerical value of a digit of the first specific digit or more set by the high-order digit numerical value input unit by reflecting an overflow in a case where increasing or decreasing the numerical value of the digit that is lower than the first specific digit by the low-order digit numerical value input unit causes an occurrence of the overflow of the numerical value of the digit that is lower than the first specific digit.

5. The program for inputting a numerical value by a touch operation according to claim 4,
wherein, in a case where the numerical value of the first specific digit or more is corrected by the overflow correction unit while the operation of moving the orbiting button by the user is being accepted, the numerical value input screen display unit displays a virtual slider at a position corresponding to the corrected numerical value on the input range bar, and then terminates the display of the virtual slider and shifts the position of the slider to a position, where the virtual slider has been displayed, upon an end of the acceptance of the operation of moving the orbiting button by the user.

6. The program for inputting a numerical value by a touch operation according to claim 2,
wherein the numerical value input screen display unit displays the numerical value display spot on the slider in a case where the operation of moving the slider by the user is not being accepted, and displays the numerical value display spot outside the slider in the case where the operation of moving the slider by the user is being accepted.
